# EUROPÄISCHE PATENTSCHRIFT

(11) **EP 3 927 990 B1**
(45) Veröffentlichungstag und Bekanntmachung des Hinweises auf die Patenterteilung: **08.03.2023**
(21) Anmeldenummer: 20710415.9
(22) Anmeldetag: 15.01.2020
(51) Int. Cl.: F16D 21/06, B60K 6/387, F16D 25/0638, F16D 25/10

(54) **KOMPAKTE KUPPLUNGSANORDNUNG EINER DREIFACHKUPPLUNG FÜR EIN ACHSPARALLELES HYBRIDMODUL**
COMPACT COUPLING ARRANGEMENT OF A TRIPLE CLUTCH FOR AN AXIALLY PARALLEL HYBRID MODULE
DISPOSITIF D'ACCOUPLEMENT COMPACT D'UN EMBRAYAGE TRIPLE POUR UN MODULE HYBRIDE À AXES PARALLÈLES

(30) Priorität: 19.02.2019 DE 102019104073
(43) Veröffentlichungstag der Anmeldung: 29.12.2021
(73) Patentinhaber: Schaeffler Technologies AG & Co. KG, 91074 Herzogenaurach (DE)
(72) Erfinder: CARL, Pascal, 77815 Bühl (DE); NEUKUM, Reiner, 77746 Schutterwald (DE); HÜGEL, Christian, 77866 Rheinau (DE); DINGER, Christian, 77855 Achern (DE)
(86) Internationale Anmeldenummer: PCT/DE2020/100026
(87) Internationale Veröffentlichungsnummer: WO 2020/169141

(56) Entgegenhaltungen:
- DE-A1-102009 059 944
- DE-A1-102017 104 446
- DE-A1-102018 116 589
- FR-A1- 3 069 296

## Beschreibung

Die Erfindung betrifft eine Kupplungsanordnung für einen Antriebsstrang eines Kraftfahrzeuges, wie eines Pkws, Lkws, Busses oder sonstigen Nutzfahrzeuges, mit drei Kupplungen.

Die Kupplungsanordnung eignet sich insbesondere für eine Hybridantriebseinheit. Eine Hybridantriebseinheit ist zwischen einem Verbrennungsmotor, einem Elektromotor und einem Getriebe angeordnet. Die Hybridantriebseinheit umfasst ein Hybridmodul mit einer Kupplungsanordnung, an die der Elektromotor sowie der Verbrennungsmotor angebunden sind. Die Kupplungsanordnung umfasst eine Dreifachkupplung, bestehend aus einer Doppelkupplung mit zwei Kupplungen sowie aus einer Trennkupplung zur Ankopplung eines Antriebselements, beispielsweise des Verbrennungsmotors.

Derartige Kupplungsanordnungen umfassen aufgrund ihrer Vielzahl von Komponenten üblicherweise einen entsprechenden Bauraum.

Als weiterer Stand der Technik wird auf die FR 3 069 296 A1, die DE 10 2017 104 446 A1, die DE 10 2018 116 589 A1 und die DE 10 2009 059 944 A1 verwiesen, aus denen Kupplungsanordnungen für einen Antriebsstrang mit jeweils drei Kupplungen bekannt sind.

Die Aufgabe der vorliegenden Erfindung besteht darin, eine möglichst kompakte Kupplungsanordnung zu schaffen.

Die Lösung der Aufgabe erfolgt erfindungsgemäß durch eine Kupplungsanordnung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Erfindung betrifft somit eine Kupplungsanordnung für einen Antriebsstrang eines Kraftfahrzeuges, wobei die Kupplungsanordnung aufweist:
ein Gehäuse, das einen Nassraum begrenzt,
einen zu dem Gehäuse relativ drehbar um eine Drehachse gelagerten Trägerkörper, vorzugsweise eine zu dem Gehäuse relativ drehbar um die Drehachse gelagerte Eingangswelle,
eine erste Kupplung, die über den Trägerkörper einen drehfest mit der Eingangswelle verbundenen ersten Erstkupplungsbestandteil und einen mit dem ersten Erstkupplungsbestandteil drehverbindbaren zweiten Erstkupplungsbestandteil aufweist,
eine zweite Kupplung, die zwei miteinander drehverbindbare Zweitkupplungsbestandteile aufweist und mit einem ersten Zweitkupplungsbestandteil drehfest an dem zweiten Erstkupplungsbestandteil der ersten Kupplung angeordnet ist, und die mit einem zweiten Zweitkupplungsbestandteil mit einer ersten Abtriebswelle verbindbar ist, und
eine dritte Kupplung, die zwei miteinander drehverbindbare Drittkupplungsbestandteile aufweist und mit einem ersten Drittkupplungsbestandteil drehfest an dem zweiten Erstkupplungsbestandteil der ersten Kupplung angeordnet ist, und die mit einem zweiten Drittkupplungsbestandteil mit einer zweiten Abtriebswelle verbindbar ist, weiterhin aufweisend mindestens eine Dämpfereinheit, die innerhalb des den Nassraum begrenzenden Gehäuses angeordnet ist und mit dem Trägerkörper wechselwirkt, wobei die Kupplungsanordnung einen Rotor zur Rotation um die erste und die zweite Abtriebswelle aufweist, wobei die Kupplungsanordnung weiterhin ein Zahnrad aufweist, das radial außen am Rotor angeordnet ist, wobei das Zahnrad ausgebildet ist zur Drehmomentübertragung zwischen der Kupplungsanordnung und einem Elektromotor über ein mit dem Elektromotor in Wirkverbindung stehenden Zahnrad oder über eine Kette.

Die Eingangswelle ist insbesondere die Kurbelwelle eines Verbrennungsmotors. Durch die Integration der Dämpfereinheit in den Nassraum kann insbesondere axialer Bauraum entlang der Drehachse eingespart werden.

Die Formulierung Nassraum bedeutet hierbei, dass es sich um eine nasslaufende, also ölgeschmierte Kupplung handelt.

Insbesondere eignet sich eine Dämpfereinheit, die normalerweise in Drehmomentwandlern verwendet wird. Dies hat den Vorteil, dass sowohl die Nassraumtrennung zwischen der Dämpfereinheit und Kupplungen, als auch eine zusätzliche Blechebene für den Kupplungsantrieb entfällt. Neben dem Dämpfer wird die Dreifachkupplung angeordnet. Für die Anbindung eines Elektromotors kann eine Zahnradstufe eingesetzt werden, welche getriebeseitig von der Kupplungsanordnung angeordnet ist.

Die beiden Abtriebswellen können insbesondere als koaxiale Getriebevollwelle und Getriebehohlwelle ausgebildet sein.

Zur Betätigung der als Reibungskupplung ausgebildeten Kupplungsanordnung, insbesondere zum Schließen der Reibungskupplung, kann ein hydraulisches Fluid, insbesondere Öl, in eine Druckkammer gepumpt werden, wodurch sich der Druck in der Druckkammer erhöht. Der ansteigende Druck in der Druckkammer kann die Federkraft des außerhalb der Druckkammer an dem Drucktopf angreifenden Federelements überwinden und den Drucktopf axial verlagern. Der Drucktopf kann dadurch gegen eine Anpressplatte drücken und einen Reibbelag zwischen der von dem Drucktopf axial verlagerten Anpressplatte und einer in axialer Richtung feststehenden Gegenplatte reibschlüssig verpressen, um die Reibungskupplung zu schließen und einen Drehmomentfluss über die Reibungskupplung herzustellen. Die Reibungskupplung kann insbesondere als Lamellenkupplung ausgestaltet sein, bei der mit einem Außenlamellenträger drehfest verbundene aber axial verlagerbare, insbesondere als Reibbeläge oder Stahlplatten ausgestaltete, Außenlamellen und mit einem Innenlamellenträger drehfest verbundene aber axial verlagerbare, insbesondere als Stahlplatten oder Reibbeläge ausgestaltete, Innenlamellen alternierend hintereinander vorgesehen sind, die zwischen der Gegenplatte und der Anpressplatte reibschlüssig verpresst werden können, um einen Drehmomentfluss zwischen dem Außenlamellenträger und dem Innenlamellenträger herbeizuführen. Im Zugbetrieb kann das in einer Brennkraftmaschine und/oder einer elektrischen Maschine erzeugte Drehmoment über den Außenlamellenträger eingeleitet und über den Innenlamellenträger, insbesondere an eine Getriebeeingangswelle eines Kraftfahrzeuggetriebes, ausgeleitet werden oder umgekehrt. Wenn der Druck in der Druckkammer reduziert wird, kann die Federkraft des Federelements den Drucktopf zurück in seine, insbesondere der geöffneten Stellung der Reibungskupplung entsprechenden, axialen Ausgangsstellung zurück verlagert werden, wobei das in der Druckkammer zuvor hineingepumpte hydraulische Fluid zu einem Ausgang verdrängt werden kann.

Gemäß einer bevorzugten Ausführungsform der Erfindung ist vorgesehen, dass die mindestens eine Dämpfereinheit zur Schwingungsdämpfung mit dem Trägerkörper verbunden ist. Die direkte Verbindung ermöglicht eine möglichst kompakte Bauweise bei gleichzeitig guter Schwingungsdämpfung.

Gemäß einer bevorzugten Ausführungsform der Erfindung ist vorgesehen, dass die Kupplungsanordnung ein Dichtblech aufweist, das zwischen der Dämpfereinheit und einem Verbrennungsmotor angeordnet ist. Somit begrenzt zumindest das Dichtblech den Nassraum, sodass kein Öl oder ähnliches Nassmittel aus dem Nassraum gelangt. Gleichzeitig handelt es sich um eine konstruktive Lösung zur kompakten Bauweise der Kupplungsanordnung.

Gemäß einer bevorzugten Ausführungsform der Erfindung ist vorgesehen, dass das Zahnrad über eine Steckverbindung radial außen am Rotor angeordnet ist. Dies ist eine Montagemöglichkeit, die wenig konstruktiven Aufwand beziehungsweise wenige technische Komponenten benötigt, sodass eine kompakte Bauform möglich ist.

Gemäß einer bevorzugten Ausführungsform der Erfindung ist vorgesehen, dass sich das Zahnrad über ein Wälzlager, besonders bevorzugt über ein doppelreihiges Schrägkugellager am Gehäuse gelagert ist. Dies ermöglicht, dass Kräfte, die beispielsweise aus einer Schrägverzahnung resultieren, direkt am Gehäuse abgestützt werden können und nicht belastend in die Kupplung eingeleitet werden. Wegen der damit möglichen leichteren Bauweise ist gleichzeitig eine kompaktere Bauweise möglich.

Gemäß einer bevorzugten Ausführungsform der Erfindung ist vorgesehen, dass die Dämpfereinheit über eine Hirth-Verzahnung mit der Eingangswelle verbunden ist, wobei die axiale Fixierung insbesondere über eine Zentralschraube und einer entsprechenden Anpressfläche erfolgt. Die Hirth-Verzahnung ist ein formschlüssiges, selbstzentrierendes und leicht lösbares Verbindungselement. Hirth-Verzahnungen verbinden Maschinenelemente mit hoher Präzision bei optimaler Drehmomentkapazität. Als Anpressfläche können unterschiedliche Lösungen dienen, beispielsweise eine von der Zentralschraube entlang der Drehachse auf die Dämpfereinheit anpressbare Anpressplatte. Diese Ausführungsform hat den Vorteil, dass die Dämpfereinheit und die Kupplungsanordnung als Komplettmodul mit beispielsweise einem Verbrennungsmotor verbunden werden können.

Gemäß einer bevorzugten Ausführungsform der Erfindung ist vorgesehen, dass die Dämpfereinheit mit ihrer zu einem Verbrennungsmotor weisenden Seite über Verbindungsmittel mit der Eingangswelle verbunden ist. Die Verbindungsmittel sind bevorzugt lösbare Verbindungsmittel, besonders bevorzugt Schrauben. Vorteilhaft hierbei ist die einfache konstruktive Lösung, die eine kompakte Bauform ermöglicht.

Gemäß einer bevorzugten Ausführungsform der Erfindung ist vorgesehen, dass die Dämpfereinheit radial nach innen derart ausgebildet ist, dass sie auf der Abtriebswelle aufgelagert ist, wobei die Dämpfereinheit insbesondere über ein Nadellager auf der Abtriebswelle aufgelagert ist.

Gemäß einer bevorzugten Ausführungsform der Erfindung ist vorgesehen, dass die erste Kupplung und die zweite Kupplung derart ausgebildet sind, dass sie einen gemeinsamen Erstkupplungslamellenträger aufweisen, beziehungsweise, dass die zweite Kupplung und die dritte Kupplung derart ausgebildet sind, dass sie einen gemeinsamen Zweitkupplungslamellenträger aufweisen, wobei der Erstkupplungslamellenträger beziehungsweise der Zweitkupplungslamellenträger stoffschlüssig, bevorzugt monolithisch ausgebildet ist. Dies bedeutet, dass die jeweiligen als Lamellenträger ausgebildeten Kupplungsbestandteile insbesondere stoffschlüssig miteinander verbunden sind, beispielsweise verschweißt oder gelötet, sodass der Lamellenträger einstückig ist. Monolithisch bedeutet hierbei ohne separates Fügeverfahren aus einem Stück bestehend. Ein besonderer Vorteil ist die Materialeinsparung, somit eine Platzersparnis und gleichzeitig eine Kostenreduktion.

Die Erfindung betrifft weiterhin eine Dämpfereinheit für eine Kupplungsanordnung mit mindestens einem der vorhergehenden Merkmale, gekennzeichnet durch mindestens eines der vorhergehenden Merkmale der Dämpfereinheit.

Besonders bevorzugt kann die Dämpfereinheit ein Zweimassenschwungrad sein. Dies bedeutet technisch, dass die Primärmasse und die über das insbesondere als Bogenfeder ausgestaltete Energiespeicherelement an die Primärmasse begrenzt verdrehbar angekoppelte Sekundärmasse ein Masse-Feder-System ausbilden können, das in einem bestimmten Frequenzbereich Drehungleichförmigkeiten in der Drehzahl und in dem Drehmoment der von einem Kraftfahrzeugmotor erzeugten Antriebsleistung dämpfen kann. Hierbei kann das Massenträgheitsmoment der Primärmasse und/oder der Sekundärmasse sowie die Federkennlinie des Energiespeicherelements derart ausgewählt sein, dass Schwingungen im Frequenzbereich der dominierenden Motorordnungen des Kraftfahrzeugmotors gedämpft werden können. Das Massenträgheitsmoment der Primärmasse und/oder der Sekundärmasse kann insbesondere durch eine angebrachte Zusatzmasse beeinflusst werden. Die Primärmasse kann eine Scheibe aufweisen, mit welcher ein Deckel verbunden sein kann, wodurch ein im Wesentlichen ringförmiger Aufnahmeraum für das Energiespeicherelement begrenzt sein kann. Die Primärmasse kann beispielsweise über in den Aufnahmeraum hinein abstehende Einprägungen tangential an dem Energiespeicherelement anschlagen. In den Aufnahmeraum kann ein Ausgangsflansch der Sekundärmasse hineinragen, der an dem gegenüberliegenden Ende des Energiespeicherelements tangential anschlagen kann. Wenn der Drehschwingungsdämpfer Teil eines Zweimassenschwungrads ist, kann die Primärmasse eine mit einer Antriebswelle eines Kraftfahrzeugmotors koppelbare Schwungscheibe aufweisen. Wenn der Drehschwingungsdämpfer als Riemenscheibenentkoppler Teil einer Riemenscheibenanordnung zum Antrieb von Nebenaggregaten eines Kraftfahrzeugs mit Hilfe eines Zugmittels ist, kann die Primärmasse eine Riemenscheibe ausbilden, an deren radial äußeren Mantelfläche das Zugmittel, insbesondere ein Keilriemen, zur Drehmomentübertragung angreifen kann. Wenn der Drehschwingungsdämpfer als Scheibendämpfer insbesondere einer Kupplungsscheibe einer Reibungskupplung verwendet wird, kann die Primärmasse mit einem Reibbeläge tragenden Scheibenbereich gekoppelt sein, während die Sekundärmasse mit einer Getriebeeingangswelle eines Kraftfahrzeuggetriebes gekoppelt sein kann.

Vorzugsweise ist auch die Verwendung eines Fliehkraftpendels mit mindestens einer Pendelmasse vorgesehen. Die mindestens eine Pendelmasse des Fliehkraftpendels hat unter Fliehkrafteinfluss das Bestreben eine möglichst weit vom Drehzentrum entfernte Stellung anzunehmen. Die Nulllage ist also die radial am weitesten vom Drehzentrum entfernte Stellung, welche die Pendelmasse in der radial äußeren Stellung einnehmen kann. Bei einer konstanten Antriebsdrehzahl und konstantem Antriebsmoment wird die Pendelmasse diese radial äußere Stellung einnehmen. Bei Drehzahlschwankungen lenkt die Pendelmasse aufgrund ihrer Massenträgheit entlang ihrer Pendelbahn aus. Die Pendelmasse kann dadurch in Richtung des Drehzentrums verschoben werden. Die auf die Pendelmasse wirkende Fliehkraft wird dadurch aufgeteilt in eine Komponente tangential und eine weitere Komponente normal zur Pendelbahn. Die tangentiale Kraftkomponente stellt die Rückstellkraft bereit, welche die Pendelmasse wieder in ihre Nulllage bringen will, während die Normalkraftkomponente auf ein die Drehzahlschwankungen einleitendes Krafteinleitungselement, insbesondere eine mit der Antriebswelle des Kraftfahrzeugmotors verbundene Schwungscheibe, einwirkt und dort ein Gegenmoment erzeugt, das der Drehzahlschwankung entgegenwirkt und die eingeleiteten Drehzahlschwankungen dämpft. Bei besonders starken Drehzahlschwankungen kann die Pendelmasse also maximal ausgeschwungen sein und die radial am weitesten innen liegende Stellung annehmen. Die in dem Trägerflansch und/oder in der Pendelmasse vorgesehenen Bahnen weisen hierzu geeignete Krümmungen auf, in denen ein insbesondere als Laufrolle ausgestaltetes, Koppelelement geführt sein kann. Vorzugsweise sind mindestens zwei Laufrollen vorgesehen, die jeweils an einer Laufbahn des Trägerflanschs und einer Pendelbahn der Pendelmasse geführt sind. Insbesondere ist mehr als eine Pendelmasse vorgesehen. Vorzugsweise sind mehrere Pendelmassen in Umfangsrichtung gleichmäßig verteilt an dem Trägerflansch geführt. Die träge Masse der Pendelmasse und/oder die Relativbewegung der Pendelmasse zum Trägerflansch ist insbesondere zur Dämpfung eines bestimmten Frequenzbereichs von Drehungleichförmigkeiten, insbesondere einer Motorordnung des Kraftfahrzeugmotors, ausgelegt. Insbesondere ist mehr als eine Pendelmasse und/oder mehr als ein Trägerflansch vorgesehen. Beispielsweise sind zwei über insbesondere als Abstandsbolzen ausgestaltete Bolzen oder Niete miteinander verbundene Pendelmassen vorgesehen, zwischen denen in axialer Richtung des Drehschwingungsdämpfers der Trägerflansch positioniert ist. Alternativ können zwei, insbesondere im Wesentlichen Y-förmig miteinander verbundene, Flanschteile des Trägerflanschs vorgesehen sein, zwischen denen die Pendelmasse positioniert ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Schnittansicht einer ersten Ausführungsform einer bevorzugten Kupplungsanordnung,
Fig. 2: eine schematische Ansicht der ersten Ausführungsform der bevorzugten Kupplungsanordnung nach Fig. 1,
Fig. 3: eine Schnittansicht einer zweiten Ausführungsform einer bevorzugten Kupplungsanordnung,
Fig. 4: eine schematische Ansicht der zweiten Ausführungsform der bevorzugten Kupplungsanordnung nach Fig. 3,
Fig. 5: eine Schnittansicht einer dritten Ausführungsform einer bevorzugten Kupplungsanordnung,
Fig. 6: eine Schnittansicht einer vierten Ausführungsform einer bevorzugten Kupplungsanordnung,
Fig. 7: eine Schnittansicht einer fünften Ausführungsform einer bevorzugten Kupplungsanordnung,
Fig. 8: eine Schnittansicht einer sechsten Ausführungsform einer bevorzugten Kupplungsanordnung,
Fig. 9: eine Schnittansicht einer siebten Ausführungsform einer bevorzugten Kupplungsanordnung und
Fig. 10: eine Schnittansicht einer achten Ausführungsform einer bevorzugten Kupplungsanordnung.

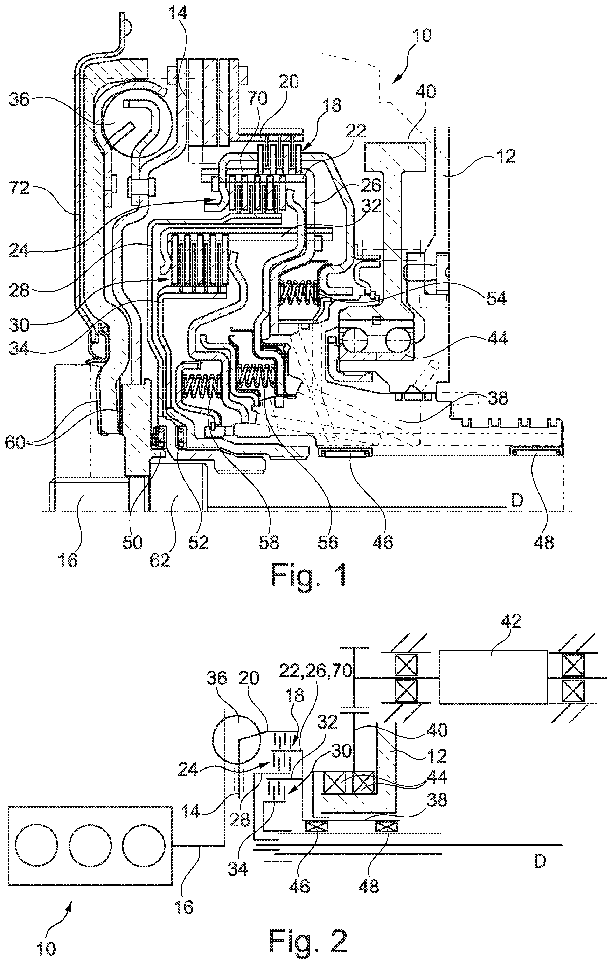

Figur 1 zeigt eine erste Ausführungsform einer Kupplungsanordnung 10 für einen Antriebsstrang eines Kraftfahrzeuges. Dabei weist die Kupplungsanordnung 10 auf:
ein Gehäuse 12, das einen Nassraum begrenzt,
einen zu dem Gehäuse 12 relativ drehbar um eine Drehachse D gelagerten Trägerkörper 14,
vorzugsweise eine zu dem Gehäuse 2 relativ drehbar um die Drehachse D gelagerte Eingangswelle 16,
eine erste Kupplung 18, die über den Trägerkörper 14 einen drehfest mit der Eingangswelle 16 verbundenen ersten Erstkupplungsbestandteil 20 und einen mit dem ersten Erstkupplungsbestandteil 20 drehverbindbaren zweiten Erstkupplungsbestandteil 22 aufweist,
eine zweite Kupplung 24, die zwei miteinander drehverbindbare Zweitkupplungsbestandteile 26, 28 aufweist und mit einem ersten Zweitkupplungsbestandteil 26 drehfest an dem zweiten Erstkupplungsbestandteil 22 der ersten Kupplung 18 angeordnet ist, und die mit einem zweiten Zweitkupplungsbestandteil 28 mit einer ersten Abtriebswelle verbindbar ist, und
eine dritte Kupplung 30, die zwei miteinander drehverbindbare Drittkupplungsbestandteile 32, 34 aufweist und mit einem ersten Drittkupplungsbestandteil 32 drehfest an dem zweiten Erstkupplungsbestandteil 22 der ersten Kupplung 18 angeordnet ist, und die mit einem zweiten Drittkupplungsbestandteil 34 mit einer zweiten Abtriebswelle verbindbar ist, weiterhin aufweisend mindestens eine Dämpfereinheit 36, die innerhalb des den Nassraum begrenzenden Gehäuses 12 angeordnet ist und mit dem Trägerkörper 14 wechselwirkt.

Eine derart ausgebildete Kupplung heißt auch Dreifachkupplung.

Durch die Integration der Dämpfereinheit 36 in das als Nassraum ausgebildete Gehäuse 12 kann insbesondere axialer Bauraum entlang der Drehachse D eingespart werden.

Die Formulierung Nassraum bedeutet hierbei, dass es sich um eine nasslaufende, also ölgeschmierte Kupplungsanordnung 10 handelt.

Eine erste Ausführungsform ist in Fig. 1 als Schnittansicht und in Fig. 2 schematisch dargestellt. Die als Nassdämpfer ausgebildete Dämpfereinheit 36 ist beispielhaft auf ihrer Primärseite mit einer Eingangswelle 16 eines Verbrennungsmotors zu verbinden, wobei die Primärseite die zum Verbrennungsmotor gerichtete Seite ist. Die Sekundärseite der Dämpfereinheit 36, also die vom Verbrennungsmotor entfernte Seite, umfasst insbesondere eine Abstützung beziehungsweise Zentrierung an der Eingangswelle 16 und beispielhaft ein Fliehkraftpendel, welches radial außen beziehungsweise neben einer bevorzugten Bogenfeder angeordnet ist. Das beispielhafte Fliehkraftpendel kann in sogenannter Sandwichbauweise aufgebaut sein. Das bedeutet, dass seine Pendelmasse zwischen zwei Stützblechen angeordnet ist. Außerdem ist am Fliehkraftpendel der Trägerkörper 14 angebracht, welcher den Antrieb der ersten Kupplung 18 bildet.

Die Dreifachkupplung gemäß der bevorzugten Ausführungsform ist radial geschachtelt, wobei die Drehachse D als Ursprungsachse für die radiale Abfolge dient. Die erste Kupplung 18 ist die radial äußerste Kupplung, die der Trennung beziehungsweise Zuschaltung des Verbrennungsmotors dient. Die zweite Kupplung 24 ist die mittlere Kupplung. Die dritte Kupplung 30 ist die innere Kupplung, also die der Drehachse D nächste Kupplung. Jede der drei Kupplungen 18, 24, 30 weist jeweils Innenlamellen und Außenlamellen auf. Die Innenlamellen der ersten Kupplung 18 und die Außenlamellen der zweiten Kupplung 24 teilen sich gemäß dieser Ausführungsform einen gemeinsamen Lamellenträger, nämlich den ersten Zweitkupplungsbestandteil 26. Dieser erste Zweitkupplungsbestandteil 26 ist mit einem Rotor 38 der Kupplungsanordnung 10 verbunden. Über einen zusätzlichen Außenlamellenträger, nämlich dem ersten Drittkupplungsbestandteil 32 können die Außenlamellen der dritten Kupplung 30 beispielhaft über eine Steckverbindung am ersten Zweitkupplungsbestandteil 26 angebunden sein. Die jeweiligen Innenlamellen der zweiten und dritten Kupplung 24, 30 bilden den Abtrieb der Kupplungsanordnung 10 und sind über die entsprechenden Innenlamellenträger mit als Getriebewellen ausgebildeten Abtriebswellen verbunden. Dabei bildet der Abtrieb der ersten Kupplung 18 vorzugsweise den Antrieb der folgenden Doppelkupplung, umfassend die zweite und dritte Kupplung 24, 30.

Die Ölversorgung sowohl für die Betätigung als auch für die Kühlung der Kupplungsanordnung 10 erfolgt über den Rotor 38. Über Drehdurchführungen kann das Öl vom Getriebe an den Rotor 38 übergeben und über entsprechende Bohrungen an Druck- und Fliehölräume verteilt werden. Die Druck- und Fliehölräume der zweiten und dritten Kupplung 24, 30 sind axial benachbart angeordnet, wohingegen der Flieh- und Druckraum der ersten Kupplung 18 radial weiter außen angeordnet ist. Die jeweiligen Dichtdurchmesser sind so aufeinander abgestimmt, dass eine Fliehölkompensation der einzelnen Kupplungen 18, 24, 30 gewährleistet ist.

Vorzugsweise wird über eine Steckverbindung radial außen am Rotor 38 ein Zahnrad 40 an die Kupplungsanordnung 10 angebunden. Über diese Verzahnung erfolgt die Drehmomentübertragung zwischen einem Elektromotor 42 und der Kupplungsanordnung 10. Demzufolge ist das Zahnrad 40 direkt neben den Kupplungen 18, 24, 30 angeordnet. Am Innendurchmesser stützt sich das Zahnrad 40 bevorzugt über ein Wälzlager 44, besonders bevorzugt über ein doppelreihiges Schrägkugellager am Gehäuse 12 ab. Die Ausbildung des Wälzlagers 44 als doppelreihiges Schrägkugellager ist vorteilhaft, weil die Kräfte, die über die Schrägverzahnung entstehen, direkt am Gehäuse 12 abgestützt und nicht in die Kupplungsanordnung 10 eingeleitet werden.

Die Kupplungsanordnung 10 ist bevorzugt am Innendurchmesser des Rotors 38 auf der als Getriebehohlwelle ausgebildeten Abtriebswelle radial gelagert. Insbesondere erfolgt dies über ein erstes und ein zweites Nadellager 46, 48.

Etwaige Axialkräfte, die beispielsweise durch die Axialschwingungen der Eingangswelle 16 entstehen können, werden vorzugsweise über ein erstes und ein zweites Axialnadellager 50, 52 zwischen der Eingangswelle 16 und dem zweiten Zweitkupplungsbestandteil 28 sowie zwischen dem zweiten Zweitkupplungsbestandteil 28 und dem zweiten Drittkupplungsbestandteil 34 abgestützt. Zwischen dem zweiten Drittkupplungsbestandteil 34 und dem Rotor 38 kann zudem beispielsweise eine Anlaufscheibe vorgesehen sein. Das Lüften der drei Kupplungen 18. 24, 30 wird insbesondere über drei Druckfedereinheiten 54, 56, 58 realisiert.

Zur Verbindung der Dämpfereinheit 36 mit dem Verbrennungsmotor werden exemplarisch zwei bevorzugte Ausführungsformen dargestellt.

Bei einer möglichen Ausführungsform zur Verbindung der Dämpfereinheit 36 mit dem Verbrennungsmotor gemäß den Fig. 1 bis 4 wird das Drehmoment zwischen der Eingangswelle 16 und der Dämpfereinheit 36 über eine Hirth-Verzahnung 60 übertragen. Dabei kann die Hirth-Verzahnung 60 axial einseitig oder, wie dargestellt, beidseitig vorhanden sein. Die axiale Verschraubung erfolgt vorzugsweise durch eine Zentralschraube 62. Der Vorteil hierbei besteht darin, dass die Dämpfereinheit 36 und die Kupplungsanordnung 10 als Komplettmodul an den Verbrennungsmotor angefügt werden können. Die Zentralschraube 62 ist getriebeseitig bevorzugt durch den Rotor 38 und Abtriebsnaben zugänglich. Dabei ist die Eingangswelle 16 insbesondere derart auszubilden, dass sie eine Hirth-Verzahnung 60 aufweist. Alternativ kann ein Adapter vorgesehen sein, der jedoch nicht näher dargestellt ist.

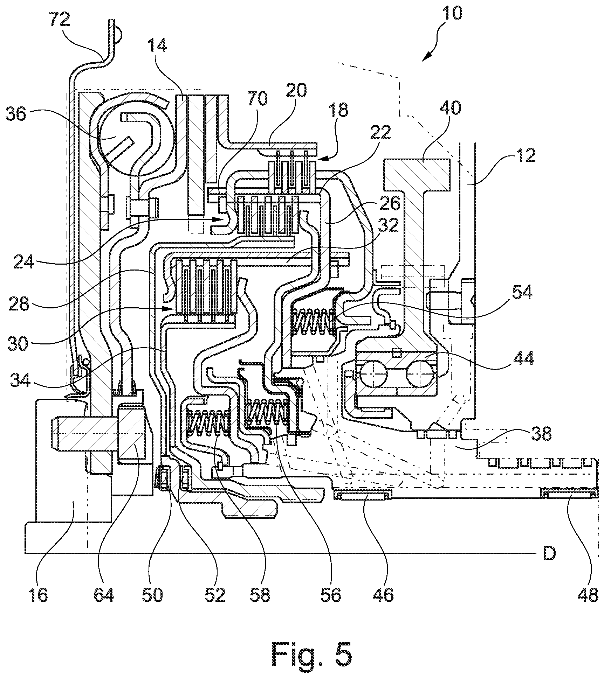

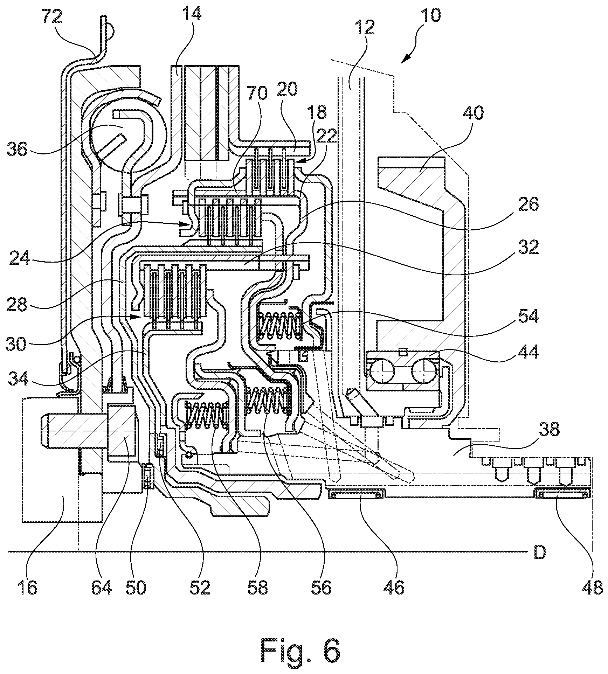

Eine alternative Ausführungsform zur Verbindung der Dämpfereinheit 36 mit dem Verbrennungsmotor ist in den Fig. 5 bis 8 dargestellt. Dabei wird eine Standardverschraubung 64 verwendet. Dabei wird die Dämpfereinheit 36 über ihre Primärseite mittels mehrerer Schrauben direkt an die Eingangswelle 16 angeschraubt. Demzufolge sollte die Dämpfereinheit 36 insbesondere zuerst zur Verbindung bezüglich des Verbrennungsmotors befestigt werden, bevor die Kupplungsanordnung 10 mit der Dämpfereinheit 36 verbunden wird. Die Montageschnittstelle liegt vorzugsweise zwischen der Dämpfereinheit 36 und der Kupplungsanordnung 10.

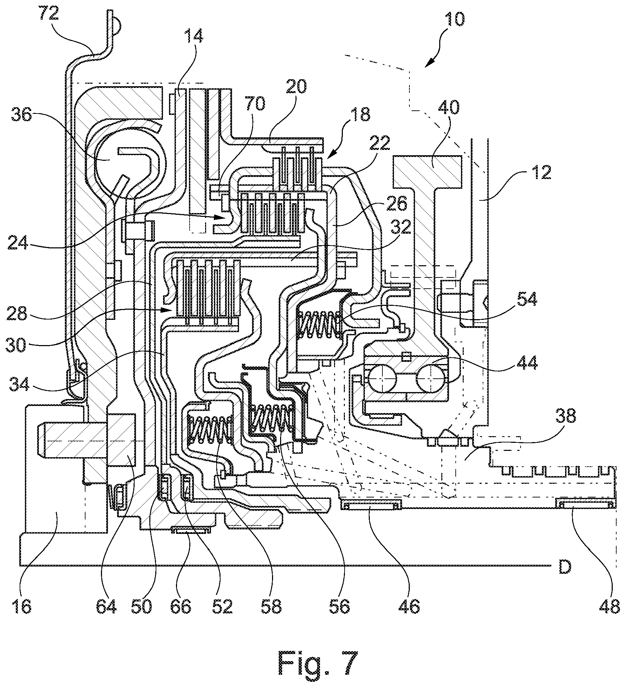

Eine besonders bevorzugte Ausführungsform zur Verbindung der Dämpfereinheit 36 mit dem Verbrennungsmotor mit Standardverschraubung 64 sieht gemäß Fig. 7 vor, dass die Sekundärseite der Dämpfereinheit 36 zusätzlich auf der als Getriebewelle ausgebildeten Abtriebswelle lagert. Dazu wird die Dämpfereinheit 36 an ihrer Sekundärseite radial nach innen verlängert und über ein zusätzliches Nadellager 66 auf der Abtriebswelle abgestützt. Dadurch wird die erste Kupplung 18 besser geführt und etwaige Radial- oder Taumelbewegungen werden reduziert.

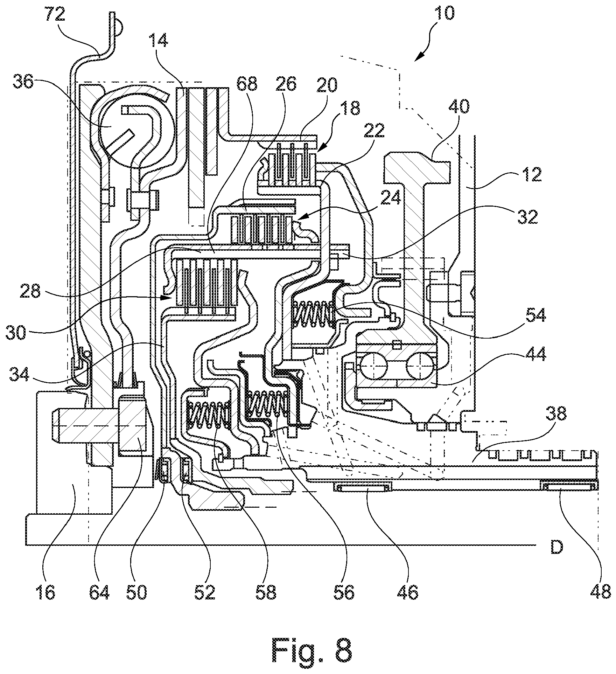

In einer weiteren Ausführungsform nach Fig. 8 ist der Aufbau der Kupplungsanordnung 10 gegenüber den Fig. 1 bis 7 abgewandelt. In den Fig. 1 bis 7 ist, wie oben beschrieben, an der ersten Kupplung 18 und an der zweiten Kupplung 24 ein gemeinsamer Lamellenträger, nämlich der erste Zweitkupplungsbestandteil 26 vorgesehen. Gemäß der Ausführungsform nach Fig. 8 teilen sich nun die zweite Kupplung 24 und die dritte Kupplung 30 einen gemeinsamen Zweitkupplungslamellenträger 68, der gemäß den Fig. 1 bis 7 aufgeteilt ist in einen zweiten Zweitkupplungsbestandteil 28 und einen ersten Drittkupplungsbestandteil 32. Die erste Kupplung 18 ist über einen eigenen Erstkupplungslamellenträger 70 am Rotor 28 angeordnet.

Um die zweite Kupplung 24 und die dritte Kupplung 30 am gemeinsamen Zweitkupplungslamellenträger 68 anordnen zu können, ist bevorzugt, dass die Lamellen, insbesondere Stahllamellen, innenverzahnt ausgebildet sind. Der Abtrieb der zweiten Kupplung 24 erfolgt über den als Außenlamellenträger ausgebildeten zweiten Zweitkupplungsbestandteil 28. Dieser zweite Drittkupplungsbestandteil 34 kann mit der als Getriebevollwelle ausgebildeten Abtriebswelle verbunden sein. Die diesbezüglichen Belaglamellen sind insbesondere außenverzahnt ausgebildet. Der Vorteil dieser Ausführungsform besteht insbesondere in der geringen Belastung auf das Abstützblech der ersten Kupplung 18. Während bei den Ausführungsformen gemäß den Fig. 1 bis 7 die doppelte Anpresskraft auf das Abstützblech der ersten Kupplung 18 und auf den zugehörigen Sicherungsring wirken kann, wirkt bei der Ausführungsform der Fig. 8 die Erstkupplungs-Anpresskraft getrennt von der zweiten und dritten Kupplung 24, 30 auf die Abstützung. Da die zweite Kupplung 24 und die dritte Kupplung 30 stets im Wechsel belastet werden, ist der Erstkupplungslamellenträger 70 nicht mit der doppelten Anpresskraft belastet. Diese Ausführungsform ist ebenfalls mit den verschiedenen Dämpfer- und Gehäusevarianten kombinierbar. Die doppelte Anpresskraft wirkt auf das Abstützblech der ersten Kupplung 18 und auf den zugehörigen Sicherungsring insbesondere dann, wenn die erste Kupplung 18 gemeinsam mit der weiteren Kupplung 24, 30 geschlossen ist.

Da die Dämpfereinheit 36 im Nassraum integriert ist, ist eine Abdichtung zwischen dem Verbrennungsmotor und der Dämpfereinheit 36 bevorzugt. Dies erfolgt insbesondere mittels eines zusätzlichen Dichtblechs 72.

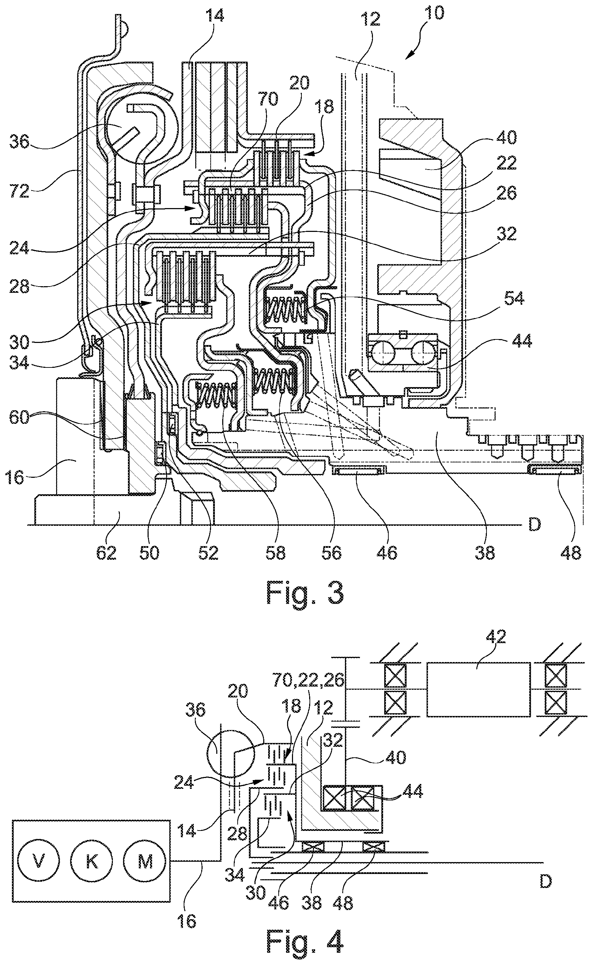

In einer zu den Fig. 1 und 2 alternativen Ausführungsform ist nach den Fig. 2 und 3 insbesondere vorgesehen, dass die Anordnung des Zahnrades 40 und der Wandung des Gehäuses 12 getauscht ist. Dabei ist vorgesehen, dass die Anordnung der Dämpfereinheit 36 und der Kupplungsanordnung 10 nahezu gleich bleibt. Die Wandung des Gehäuses 12 nach den Fig. 2 und 3 ist zwischen der Kupplungsanordnung 10 und dem Zahnrad 40 angeordnet.

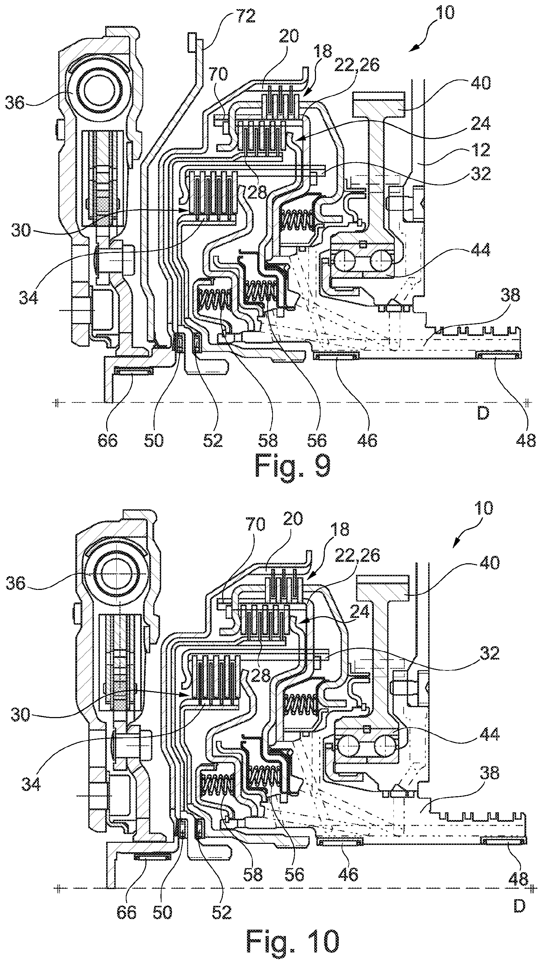

Grundsätzlich kann gemäß der Fig. 9 äquivalent vorgesehen sein, die Kupplungsanordnung 10 mit einer als vorbekanntes Zweimassenschwungrad ausgebildeten Dämpfereinheit 36 zu verwenden. Dazu ist der erste Erstkupplungsbestandteil 20 derart angepasst, dass er nicht wie in den Fig. 1 bis 8 dargestellt an der Sekundärseite der Dämpfereinheit 36 direkt angebracht ist, sondern an ein Wellenelement angreift, das drehfest an der Eingangswelle 16 angeordnet ist. Dieses Wellenelement ist vorzugsweise mit einer Nabe der Sekundärseite des vorbekannten Zweimassenschwungrades über eine Steckverzahnung verbunden. Das vorbekannte Zweimassenschwungrad kann über eine Standardverschraubung an der Kurbelwelle des Verbrennungsmotors angeordnet sein. Der erste Erstkupplungsbestandteil 20 weist somit eine eigene Eingangswelle mit Außenverzahnung auf, die über eine Nabenverzahnung der Sekundärseite des Zweimassenschwungrades zu verbinden ist. Zusätzlich wird ein nassraumtrennendes Dichtblech 72 zwischen dem vorbekannten Zweimassenschwungrad und der Kupplungsanordnung 10 angeordnet.

In einer weiteren Ausführungsform nach Fig. 10 wird die als Zweimassenschwungrad ausgebildete Dämpfereinheit 36 direkt im Nassraum angeordnet. Allerdings kann die herkömmliche Verbindung zwischen der Dämpfereinheit 36 und der Kupplungsanordnung 10 verwendet werden. Es ist keine direkte Verbindung zwischen beispielsweise einem Fliehkraftpendel und der ersten Kupplung 18 notwendig.

Insgesamt ist möglich, dass anstelle eines einzelnen Zahnrades 40 mindestens ein zusätzliches Zwischenrad eingesetzt werden kann. Dadurch können die Umfangsgeschwindigkeiten an den Zahnrädern 40 reduziert werden.

Alternativ kann auch eine Kette anstelle des Zahnrades 40 für die Drehmomentübertragung zwischen dem Elektromotor 42 und der Kupplungsanordnung 10 verwendet werden.

### Bezugszeichenliste

- 10: Kupplungsanordnung
- 12: Gehäuse
- 14: Trägerkörper
- 16: Eingangswelle
- 18: Erste Kupplung
- 20: Erster Erstkupplungsbestandteil
- 22: Zweiter Erstkupplungsbestandteil
- 24: Zweite Kupplung
- 26: Erster Zweitkupplungsbestandteil
- 28: Zweiter Zweitkupplungsbestandteil
- 30: Dritte Kupplung
- 32: Erster Drittkupplungsbestandteil
- 34: Zweiter Drittkupplungsbestandteil
- 36: Dämpfereinheit
- 38: Rotor
- 40: Zahnrad
- 42: Elektromotor
- 44: Wälzlager
- 46: Erstes Nadellager
- 48: Zweites Nadellager
- 50: Erstes Axialnadellager
- 52: Zweites Axialnadellager
- 54: Erste Druckfedereinheit
- 56: Zweite Druckfedereinheit
- 58: Dritte Druckfedereinheit
- 60: Hirth-Verzahnung
- 62: Zentralschraube
- 64: Standardverschraubung
- 66: Nadellager der Dämpfereinheit
- 68: Zweitkupplungslamellenträger
- 70: Erstkupplungslamellenträger
- 72: Dichtblech

- D: Drehachse

## Patentansprüche

1. Kupplungsanordnung (10) für einen Antriebsstrang eines Kraftfahrzeuges, wobei die Kupplungsanordnung (10) aufweist:
- ein Gehäuse (12), das einen Nassraum begrenzt,
- einen zu dem Gehäuse (12) relativ drehbar um eine Drehachse (D) gelagerten Trägerkörper (14),
- eine erste Kupplung (18), die über den Trägerkörper (14) einen ersten Erstkupplungsbestandteil (20) zur drehfesten Verbindung mit einer Eingangswelle (16) aufweist und einen mit dem ersten Erstkupplungsbestandteil (20) drehverbindbaren zweiten Erstkupplungsbestandteil (22) aufweist,
- eine zweite Kupplung (24), die zwei miteinander drehverbindbare Zweitkupplungsbestandteile (26, 28) aufweist und mit einem ersten Zweitkupplungsbestandteil (26) drehfest an dem zweiten Erstkupplungsbestandteil (22) der ersten Kupplung (18) angeordnet ist, und die mit einem zweiten Zweitkupplungsbestandteil (28) mit einer ersten Abtriebswelle verbindbar ist, und
- eine dritte Kupplung (30), die zwei miteinander drehverbindbare Drittkupplungsbestandteile (32, 34) aufweist und mit einem ersten Drittkupplungsbestandteil (32) drehfest an dem zweiten Erstkupplungsbestandteil (22) der ersten Kupplung (18) angeordnet ist, und die mit einem zweiten Drittkupplungsbestandteil (34) mit einer zweiten Abtriebswelle verbindbar ist,
- mindestens eine Dämpfereinheit (36), die innerhalb des den Nassraum begrenzenden Gehäuses (12) angeordnet ist und mit dem Trägerkörper (14) wechselwirkt **dadurch gekennzeichnet, dass** die Kupplungsanordnung (10) einen Rotor (38) zur Rotation um die erste und die zweite Abtriebswelle aufweist, wobei die Kupplungsanordnung weiterhin ein Zahnrad (40) aufweist, das radial außen am Rotor (38) angeordnet ist, wobei das Zahnrad (40) ausgebildet ist zur Drehmomentübertragung zwischen der Kupplungsanordnung (10) und einem Elektromotor (42) über ein mit dem Elektromotor (42) in Wirkverbindung stehenden Zahnrad oder über eine Kette.

2. Kupplungsanordnung (10) für einen Antriebsstrang eines Kraftfahrzeuges nach Anspruch 1, **dadurch gekennzeichnet, dass** die mindestens eine Dämpfereinheit (36) zur Schwingungsdämpfung mit dem Trägerkörper (14) verbunden ist.

3. Kupplungsanordnung (10) für einen Antriebsstrang eines Kraftfahrzeuges nach Anspruch 1 oder 2, **dadurch gekennzeichnet, dass** die Kupplungsanordnung (10) ein Dichtblech (72) aufweist, das zwischen der Dämpfereinheit (36) und einem Verbrennungsmotor angeordnet ist.

4. Kupplungsanordnung (10) für einen Antriebsstrang eines Kraftfahrzeuges nach dem vorhergehenden Anspruch, **dadurch gekennzeichnet, dass** das Zahnrad (40) über eine Steckverbindung radial außen am Rotor (38) angeordnet ist.

5. Kupplungsanordnung (10) für einen Antriebsstrang eines Kraftfahrzeuges nach einem der vorherigen Ansprüche, **dadurch gekennzeichnet, dass** sich das Zahnrad (40) über ein Wälzlager (44), besonders bevorzugt über ein doppelreihiges Schrägkugellager am Gehäuse (12) gelagert ist.

6. Kupplungsanordnung (10) für einen Antriebsstrang eines Kraftfahrzeuges nach mindestens einem der vorhergehenden Ansprüche, **dadurch gekennzeichnet, dass** die Dämpfereinheit (36) über eine Hirth-Verzahnung mit der Eingangswelle (16) verbunden ist, wobei die axiale Fixierung insbesondere über eine Zentralschraube (62) und einer entsprechenden Anpressfläche erfolgt.

7. Kupplungsanordnung (10) für einen Antriebsstrang eines Kraftfahrzeuges nach mindestens einem der Ansprüche 1 bis 5, **dadurch gekennzeichnet, dass** die Dämpfereinheit (36) mit ihrer zu einem Verbrennungsmotor weisenden Seite über Verbindungsmittel mit der Eingangswelle (16) verbunden ist.

8. Kupplungsanordnung (10) für einen Antriebsstrang eines Kraftfahrzeuges nach mindestens einem der vorhergehenden Ansprüche, **dadurch gekennzeichnet, dass** die Dämpfereinheit (36) radial nach innen derart ausgebildet ist, dass sie auf der Abtriebswelle aufgelagert ist, wobei die Dämpfereinheit (36) insbesondere über ein Nadellager (66) auf der Abtriebswelle aufgelagert ist.

9. Kupplungsanordnung (10) für einen Antriebsstrang eines Kraftfahrzeuges nach mindestens einem der vorhergehenden Ansprüche, **dadurch gekennzeichnet, dass** die erste Kupplung (18) und die zweite Kupplung (24) derart ausgebildet sind, dass sie einen gemeinsamen Erstkupplungslamellenträger (70) aufweisen, beziehungsweise, dass die zweite Kupplung (24) und die dritte Kupplung (30) derart ausgebildet sind, dass sie einen gemeinsamen Zweitkupplungslamellenträger (68) aufweisen, wobei der Erstkupplungslamellenträger (70) beziehungsweise der Zweitkupplungslamellenträger (68) stoffschlüssig, bevorzugt monolithisch ausgebildet ist.

## Claims

1. A clutch assembly (10) for a drive train of a motor vehicle, wherein the clutch assembly (10) comprises:
- a housing (12), which delimits a wet chamber,
- a support body (14) mounted rotatably about an axis of rotation (D) relative to the housing (12),
- a first clutch (18), which comprises a first first clutch component (20) via the support body (14) for non-rotatable connection to an input shaft (16) and a second first clutch component (22) that is rotatably connectable to the first first clutch component (20),
- a second clutch (24), which comprises two second clutch components (26, 28) that are rotatably connectable to one another and which is non-rotatably arranged with a first second clutch component (26) on the second first clutch component (22) of the first clutch (18), and which can be connected with a second second clutch component (28) to a first output shaft, and
- a third clutch (30), which comprises two third clutch components (32, 34) that are rotatably connectable to one another and which is non-rotatably arranged with a first third clutch component (32) on the second first clutch component (22) of the first clutch (18), and which can be connected with a second third clutch component (34) to a second output shaft,
- at least one damper unit (36), which is arranged within the housing (12) delimiting the wet chamber and which interacts with the support body (14), **characterised in that** the clutch assembly (10) comprises a rotor (38) for rotation about the first and the second output shaft, wherein the clutch assembly also comprises a gear wheel (40) which is arranged radially on the outside of the rotor (38), wherein the gear wheel (40) is configured for torque transmission between the clutch assembly (10) and an electric motor (42) via a gear wheel in operative connection with the electric motor (42) or via a chain.

2. The clutch assembly (10) for a drive train of a motor vehicle according to claim 1, **characterised in that** the at least one damper unit (36) is connected to the support body (14) for vibration damping.

3. The clutch assembly (10) for a drive train of a motor vehicle according to claim 1 or 2, **characterised in that** the clutch assembly (10) comprises a sealing plate (72) which is arranged between the damper unit (36) and an internal combustion engine.

4. The clutch assembly (10) for a drive train of a motor vehicle according to the preceding claim, **characterised in that** the gear wheel (40) is arranged radially on the outside of the rotor (38) via a plug connection.

5. The clutch assembly (10) for a drive train of a motor vehicle according to any one of the preceding claims, **characterised in that** the gear wheel (40) is mounted on the housing (12) via a roller bearing (44), particularly preferably via a double-row angular contact ball bearing.

6. The clutch assembly (10) for a drive train of a motor vehicle according to at least one of the preceding claims, **characterised in that** the damper unit (36) is connected to the input shaft (16) via a Hirth coupling, wherein the axial securing occurs in particular via a central screw (62) and a corresponding contact surface.

7. The clutch assembly (10) for a drive train of a motor vehicle according to at least one of claims 1 to 5, **characterised in that** the damper unit (36) is connected to the input shaft (16) via connecting means with its side facing an internal combustion engine.

8. The clutch assembly (10) for a drive train of a motor vehicle according to at least one of the preceding claims, **characterised in that** the damper unit (36) is configured radially inwards in such a way that it is supported on the output shaft, wherein the damper unit (36) is supported on the output shaft in particular via a needle bearing (66).

9. The clutch assembly (10) for a drive train of a motor vehicle according to at least one of the preceding claims, **characterised in that** the first clutch (18) and the second clutch (24) are configured in such a way that they comprise a common first clutch disc carrier (70), and/or **in that** the second clutch (24) and the third clutch (30) are configured in such a way that they comprise a common second clutch disc carrier (68), wherein the first clutch disc carrier (70) and/or the second clutch disk carrier (68) is/are configured to be integrally bonded, preferably monolithically.

## Revendications

1. Ensemble d'embrayages (10) pour une chaîne cinématique d'un véhicule à moteur, l'ensemble d'embrayages (10) comportant :
- un carter (12) délimitant un espace humide,
- un corps de support (14) monté de manière à pouvoir tourner autour d'un axe de rotation (D) par rapport au carter (12),
- un premier embrayage (18), qui comporte un premier élément de premier embrayage (20) pour un accouplement solidaire en rotation à un arbre d'entrée (16) par l'intermédiaire du corps de support (14) et un deuxième élément de premier embrayage (22) pouvant être solidaire en rotation au premier élément de premier embrayage (20),
- un deuxième embrayage (24) qui présente deux éléments de deuxième embrayage (26, 28) pouvant être solidaires en rotation l'un de l'autre et qui est disposé sur le deuxième élément de premier embrayage (22) du premier embrayage (18) solidaire en rotation d'un premier élément de deuxième embrayage (26) et qui peut être accouplé à un premier arbre de sortie par l'intermédiaire d'un second élément de deuxième embrayage (28) et
- un troisième embrayage (30) qui présente deux éléments de troisième embrayage (32, 34) pouvant être solidaires en rotation l'un de l'autre et qui est disposé sur le deuxième élément de premier embrayage (22) du premier embrayage (18) solidaire en rotation d'un premier élément de troisième embrayage (32) et qui peut être accouplé à un second arbre de sortie par l'intermédiaire d'un second élément de troisième embrayage (34),
- au moins un bloc amortisseur (36), qui est disposé à l'intérieur du carter (12) délimitant l'espace humide et coopère avec le corps de support (14), **caractérisé en ce que** l'ensemble d'embrayage (10) comporte un rotor (38) pour tourner autour du premier et du second arbre de sortie, l'ensemble d'embrayages comportant également un pignon (40) qui est disposé radialement à l'extérieur du rotor (38), le pignon (40) étant conçu pour la transmission de couple entre l'ensemble d'embrayages (10) et un moteur électrique (42) par l'intermédiaire d'un pignon en liaison fonctionnelle avec le moteur électrique (42) ou par l'intermédiaire d'une chaîne.

2. Ensemble d'embrayages (10) pour une chaîne cinématique d'un véhicule à moteur selon la revendication 1, **caractérisé en ce que** l'au moins un bloc amortisseur (36) est relié au corps de support (14) pour l'amortissement des vibrations.

3. Ensemble d'embrayages (10) pour une chaîne cinématique d'un véhicule à moteur selon la revendication 1 ou 2, **caractérisé en ce que** l'ensemble d'embrayages (10) comporte une plaque d'étanchéité (72) qui est disposée entre le bloc amortisseur (36) et un moteur à combustion interne.

4. Ensemble d'embrayages (10) pour une chaîne cinématique d'un véhicule à moteur selon la revendication précédente, **caractérisé en ce que** le pignon (40) est disposé radialement à l'extérieur du rotor (38) par l'intermédiaire d'une liaison enfichable.

5. Ensemble d'embrayages (10) pour une chaîne cinématique d'un véhicule à moteur selon l'une quelconque des revendications précédentes, **caractérisé en ce que** le pignon (40) est monté sur le carter (12) par l'intermédiaire d'un palier à roulement (44), de manière particulièrement préférée par l'intermédiaire d'un roulement à billes à contact oblique à deux rangées.

6. Ensemble d'embrayages (10) pour une chaîne cinématique d'un véhicule à moteur selon au moins l'une quelconque des revendications précédentes, **caractérisé en ce que** le bloc amortisseur (36) est relié à l'arbre d'entrée (16) par une denture Hirth, la fixation axiale s'effectuant notamment par une vis centrale (62) et une surface d'appui correspondante.

7. Ensemble d'embrayages (10) pour une chaîne cinématique d'un véhicule à moteur selon au moins l'une quelconque des revendications 1 à 5, **caractérisé en ce que** le bloc amortisseur (36) est relié à l'arbre d'entrée (16) par des moyens de liaison sur son côté tourné vers un moteur à combustion interne.

8. Ensemble d'embrayages (10) pour une chaîne cinématique d'un véhicule à moteur selon au moins l'une quelconque des revendications précédentes, **caractérisé en ce que** le bloc amortisseur (36) est conçu radialement vers l'intérieur de telle sorte qu'il repose sur l'arbre de sortie, le bloc amortisseur (36) reposant sur l'arbre de sortie notamment par l'intermédiaire d'un roulement à aiguilles (66).

9. Ensemble d'embrayages (10) pour une chaîne cinématique d'un véhicule à moteur selon au moins l'une quelconque des revendications précédentes, **caractérisé en ce que** le premier embrayage (18) et le deuxième embrayage (24) sont conçus de telle sorte qu'ils comportent un porte-disque de premier embrayage commun (70) ou que le deuxième embrayage (24) et le troisième embrayage (30) sont conçus de telle sorte qu'ils comportent un porte-disque de deuxième embrayage commun (68), le porte-disque de premier embrayage (70) ou le porte-disque de deuxième embrayage (68) étant formé par liaison de matière, de préférence de manière monolithique.
